Europäisches Patentamt

European Patent Office

Office européen des brevets

(19)

(11) Publication number: **0 207 660**
A2

(12) # EUROPEAN PATENT APPLICATION

(21) Application number: 86304460.8

(22) Date of filing: 11.06.86

(51) Int. Cl.⁴: **F 16 D 65/22**

(30) Priority: 01.07.85 US 750500

(43) Date of publication of application:
07.01.87 Bulletin 87/2

(84) Designated Contracting States:
DE FR GB IT

(71) Applicant: LUCAS INDUSTRIES public limited company
Great King Street
Birmingham, B19 2XF West Midlands(GB)

(72) Inventor: Layton, Charles Thomas
565, Baldwin Court
Birmingham Michigan 48009(US)

(74) Representative: Waite, Anthony William et al,
MARKS & CLERK Alpha Tower Suffolk Street Queensway
Birmingham B1 1TT(GB)

(54) Wedge-type brake actuator.

(57) A wedge-type brake actuator has a pair of brake-actuating tappets (22A) engagable by a pair of rollers (22) carried by a cage (17), the rollers being separable to expand the tappets by the action of a wedge (11) movable between the rollers by means of an actuating member (16). A stop means is provided in the form of a sleeve (30) which acts to limit movement of the cage relative to the wedge member.

FIG.3.

EP 0 207 660 A2

## WEDGE-TYPE BRAKE ACTUATOR.

This invention relates to a wedge-type brake actuator primarily for use in an internal shoe drum brake, and of the general kind in which a pair of rollers associated with respective brake actuating elements are carried by a cage movable along a path normal to the direction of actuating movement of said elements, and a wedge member is reciprocable along said path between the rollers with opposed inclined surfaces thereof engagable respectively with the rollers to urge the rollers and their associated elements outwardly for brake actuation upon movement of the wedge in one direction along said path.

Although wedge-type actuators of this general type are generally satisfactory in operation and widely used, for example, on commercial vehicles, it has been found to be possible for the inclined surfaces of the wedge to pass beyond the rollers so that the rollers lodge on the wedge shank behind the wedge proper, making it difficult to achieve satisfactory wedge retraction upon removal of the brake actuation force and possibly giving rise to damage of the rollers and/or wedge shank.

An object of the invention is to provide an improved wedge-type brake actuator in which the aforesaid problem is minimised or obviated.

According to the invention, a wedge-type brake actuator of the aforesaid general kind is provided with stop means for limiting movement of the cage relative to the wedge member.

In one convenient arrangement, the stop means is interposed between the cage and means other than the wedge member, said last-named means being preferably an actuating element operable to actuate the wedge member.

The invention will now be described, by way of example, with reference to the accompanying drawings in which:-

Figure 1 is a side elevation of an internal shoe-drum brake having a wedge actuator constructed in accordance with a first emodiment of the invention;

Figure 2 is a cross-sectional view taken along the line 2-2 of Figure 1;

Figure 3 is an enlarged longitudinal cross-section through part of the wedge actuator of Figures 1 and 2, and

Figure 4 is a view similar to Figure 3 illustrating a second embodiment of the actuator of the invention.

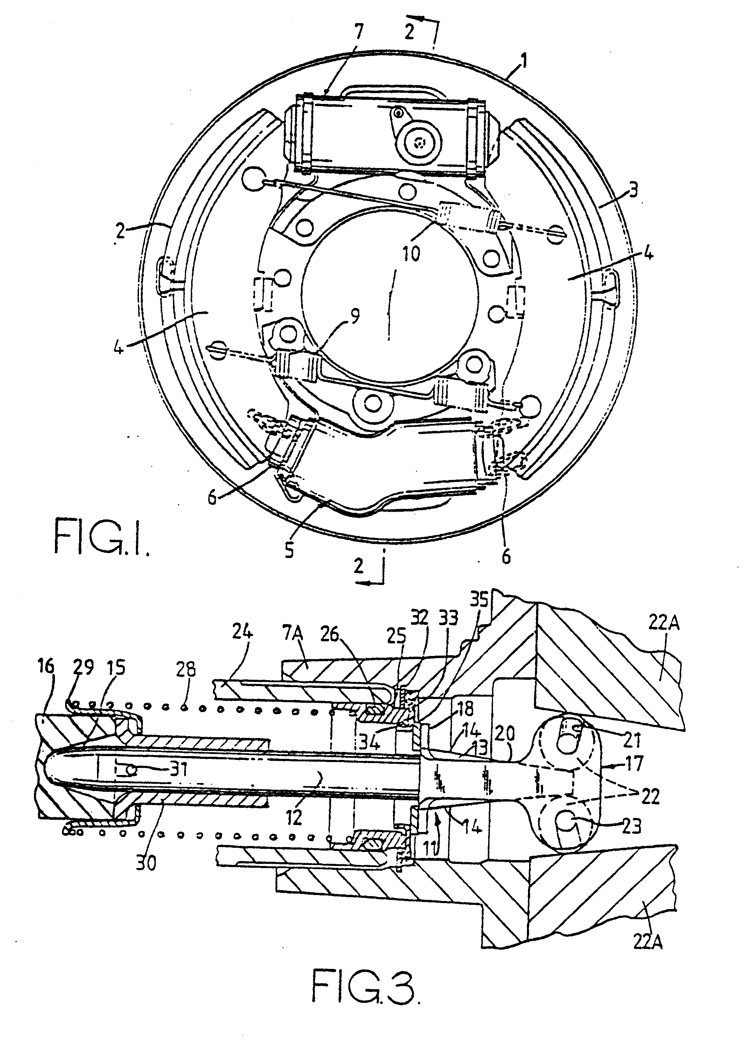

Referring to Figure 1, this illustrates a two leading shoe drum type brake incorporating a wedge actuator constructed in accordance with an embodiment of the invention. Although the invention is described in conjuction with such a type of drum brake, it should be readily apparent to those skilled in the art that the invention may be applied to any of the known types of wedge actuated brakes.

The brake includes a backing plate 1 that is adapted to be fixed in any suitable manner to an associated vehicle and which co-operates with a rotating drum (not shown). A pair of brake shoes 2 and 3 are slidably supported by the backing plate 1 in known manner and have respective web portions 4.

A first wheel cylinder, indicated generally by the reference numeral 5, has a pair of internal fluid pistons that act against respective plungers 6 which, in turn, engage the ends of the brake shoe webs 4 for urging the brake shoes 2 and 3 outwardly into engagement with the associated drum. In a similar manner, a second wheel culinder assembly 7 is disposed adjacent the opposite ends of the webs 4 and operates in a similar manner so as to urge the shoes 2 and 3 outwardly into engagement with the rotating drum. The cylinder assembly 7 includes a wedge-type actuator constructed in accordance with the invention and indicated generally at 8 (Figure 2). A pair of return springs 9 and 10 are interposed between the webs 4 for retracting the brake in known manner.

The wedge-type actuator 8 will now be described in more detail in Figure 3 and will be seen to include a wedge member, indicated generally at 11, having a cylindrical shank portion 12 that terminates in a wedge 13 with oppositely facing wedging surfaces 14. The surfaces 14 are inclined so that at their inner ends they extend a greater distance than the diameter of the shank 12. In a perpendicular plane, the wedge 13 has a thickness that is equal to or slightly greater than that of the shank 12. The end of the shank 12 remote from the wedge 13 is formed with a rounded nose piece 15 that is adapted to be engaged by a suitable actuator 16 which may be of any conventional type, such as a spring applied fluid pressure release type, or a fluid pressure applied type.

A cage, indicated generally by the reference numeral 17, is formed from sheet metal or the like and has a base portion 18 formed with an opening through which the cylindrical shank 12 of the wedge 11 freely passes. A pair of arms 20 extend outwardly and forwardly from the base 18 and are formed with a pair of inclined slots 21.

Rollers 22 have shank portions 23 that are journaled within the slots 21 in each of the arms 20. The rollers 22 are normally held in engagement with the wedge surfaces 14 through their contact with tapered faces of tappet members 22A slidable in the cylinder assembly 7 in conventional manner.

The wedge actuator 11 is received within an actuator tube 24 that is affixed in a suitable manner to a part 7A of the wheel cylinder housing 7. A moulded plastic support 25 has an annular groove in which an O-ring 26 is received for sealing the support 25 to the end of the actuator tube 24. The support 25 may be interference fitted onto one end of a spring 28. The opposite end of the spring 28 acts against a retainer 29 which, in turn, encircles a sleeve 30 that is fixed axially to the shank 12 of the wedge actuator 11 by means of a pin 31. Hence, the spring 28 urges the wedge actuator towards a retracted position.

The sleeve 25 is held in place by means of a snap ring 32 which is received in an annular groove in the wheel cylinder portion 7A and which engages a retaining ring 33. The retaining ring 33 is sealed to the support 25 by means of an O-ring 34. A washer 35 encircles the wedge shank 12 and is normally held in engagement with the retainer 33.

The brakes are actuated by the wedge actuator in the following manner. The actuating member 16 is operated by any of the aforedescribed conventional means so as to urge the wedge 13 to the right as viewed in Figure 3.

When this movement occurs, the wedge surfaces 14 will urge the rollers 22 outwardly and cause the inclined surfaces of the tappets 22A to be wedged apart in known manner. The cage 18 will move in the same direction but at a slower rate due to the inclined surfaces and the wedging action. Hence, there will be a mechanical advantage exerted on the tappet inclined surfaces so as to cause an amplification in the actuating force of the brake. If, for some reason, the wedge is held in a partially applied condition, insufficient to bring the shoes 2, 3 into contact with the drum and the vehicle is operated in this condition, it is possible for the cage 17 and rollers 22 to move back towards the retaining ring 33 under the effect of vibration. By this means, the wedge actuator mechanism can become out of phase. In this event, further application of the wedge could, with a conventional type wedge actuator, result in the wedging surfaces 14 passing rollers 22. The rollers 22 would then engage the shank 12 of the wedge and could prevent retraction of the wedge by the spring 28. In addition, damage to the rollers 22 and wedge shank 12 can result from their engagement under load.

In the actuator of the present invention, however, the end of the sleeve 30 will engage the washer 35 and cage 18 before this can occur. At this time, the reaction force exerted by the cage 18 will act directly back through the sleeve 30 to the actuating member 16 so there will be no force amplification in this direction. Hence, the device offers an extremely rigid stop and yet one which will operate in a very convenient and simple manner.

Release of the brakes is accomplished by the spring 28 urging the wedge actuator member 11 rearwardly and the return springs 9 and 10 cause the brake shoes 2 and 3 to retract and urge the rollers 22 inwardly, the cage 17 following the wedge actuator 11 towards its returned position.

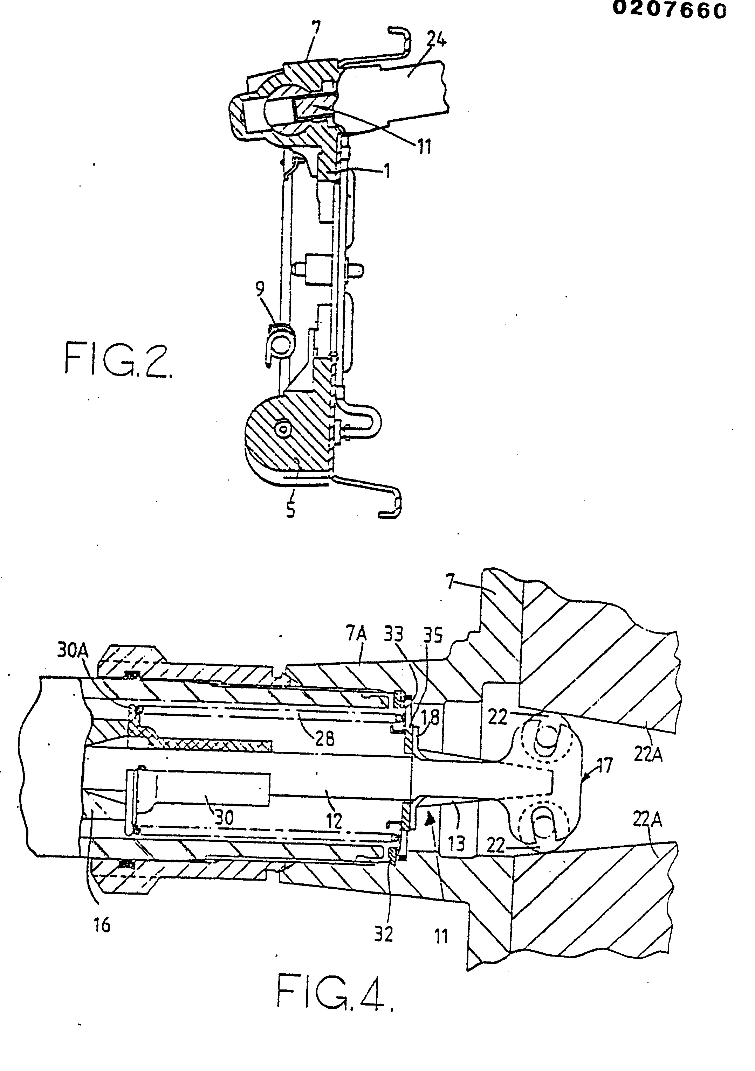

The alternative embodiment of the wedge actuator of the invention illustrated in Figure 4 is similar in most respects to that described above and only the significant differences are described in detail. The reference numerals of Figure 3 are used, where applicable. The main difference between the two embodiments is the simplification of the sealing arrangement constituted by the components 25, 26 and 34 in Figure 3, these having been omitted in Figure 4. The retainer 33 which previously housed the seal 34 and against which bears the washer 35 now acts as an abutment for one end of the spring 28. The other end of this spring engages a flange 30A of the sleeve 30, the separate spring retainer 29 of the previous embodiment having been eliminated. The operation of this embodiment is similar to that of Figures 1 to 3.

It will be readily apparent from the foregoing description that a very simple and highly effective stop mechanism is provided that will ensure that the rollers do not travel beyond the limits of the inclined wedge surfaces.

The described embodiments of the invention may be modified in a variety of ways without departing from the scope of the invention, as defined by the appended claims.

0207660

## CLAIMS.

1.     A wedge-type brake actuator comprising a pair of oppositely acting brake actuating elements, a cage carrying a pair of rollers each associated with a respective one of said elements, said cage being movable along a path normal to the direction of actuating movement of said elements, and a wedge member reciprocable along said path between said rollers and having opposed inclined faces thereof engagable respectively with the rollers to urge the rollers and their associated elements outwardly for brake actuation upon movement of said wedge member in one direction along said path, stop means being provided for limiting the movement of the cage relative to the wedge member.

2.     An actuator according to Claim 1 wherein the stop means is operatively disposed between the cage and a member other than the wedge member.

3.     An actuator according to Claim 1 or Claim 2 further including an actuating element operable to actuate the wedge member, the stop means being disposed between the actuating element and the cage.

4.     An actuator according to any one of the preceding claims wherein the stop means comprises a sleeve encircling a cylindrical portion of the wedge member and serving as an abutment for the cage, the sleeve being fixed axially relative to the wedge member.

5.     An actuator according to any one of the preceding claims wherein the stop means provides a reaction abutment for a wedge return spring.

6.      An actuator according to Claim 5 wherein said return spring abuts an additional member engaging the stop means.

7.      An actuator according to Claim 5 wherein said return spring abuts a reaction surface provided on the stop means.

8.      A wedge-type brake actuator substantially as hereinbefore described with reference to Figures 1 to 3 or Figure 4 of the accompanying drawings.

FIG.I.

FIG.3.

2/2

0207660

FIG.2.

FIG.4.